# FASCICULE DE BREVET EUROPEEN

(11) **EP 2 862 440 B1**
(45) Date de publication et mention de la délivrance du brevet: **14.02.2018**
(21) Numéro de dépôt: 14186871.1
(22) Date de dépôt: 29.09.2014
(51) Int. Cl.: A01K 97/10

(54) **Rouleau à déboiter**
Abroller Rutenauflage
Pole roller

(30) Priorité: 18.10.2013 FR 1360144
(43) Date de publication de la demande: 22.04.2015
(73) Titulaire: Mossalgue, 77170 Brie Comte Robert (FR)
(72) Inventeur: Mossalgue, François, 94120 Fontenay-sous-Bois (FR)
(74) Mandataire: Cabinet HERRBURGER

(56) Documents cités:
- EP-A2- 2 052 601
- FR-A1- 2 885 487
- GB-A- 2 301 007
- GB-A- 2 376 399
- GB-A- 2 406 773

## Description

La présente invention a pour objet un rouleau à déboiter adapté à la pêche au coup.

Les spécialistes dans le domaine de la pêche ne sont pas sans ignorer qu'il existe plusieurs types fondamentalement différents de pêches parmi lesquels on peut, à titre d'exemple, mentionner la pêche à la carpe lors de la pratique de laquelle les pêcheurs utilisent des cannes de dimensions relativement faibles (de l'ordre de 2 mètres) qu'ils équipent d'un fil enroulé sur un moulinet et passant dans des anneaux fixés le long de cette canne, ou encore la pêche au coup lors de la pratique de laquelle les pêcheurs et en particulier les pêcheurs de concours utilisent des cannes très longues dont la longueur est fréquemment supérieure à 10 mètres.

Les cannes de pêche au coup sont constituées par l'association de plusieurs éléments de canne ou brins ayant un diamètre décroissant du brin arrière ou talon que le pêcheur tient dans ses mains au brin avant et qui s'emboitent les uns dans les autres.

La partie la plus fine nommée « kit » par les spécialistes, qui comprend deux à quatre brins et a une longueur de 1.5 à 2 mètres porte le fil qui est lui-même équipé d'un hameçon et d'un flotteur.

Lors d'un concours, les pêcheurs ont l'habitude de préparer à l'avance plusieurs kits portant un fil de pêche équipé d'un hameçon qu'ils utilisent sélectivement en cas de besoin.

Compte tenu de la longueur d'une canne de pêche au coup, lorsque le pêcheur veut remplacer un kit par un autre ou avoir accès au fil notamment en présence d'une touche, le pêcheur doit faire glisser sa canne vers l'arrière.

Pour éviter que celle-ci traine sur le sol, en particulier sur l'herbe lors de cette manoeuvre, ce qui risquerait de l'endommager, les pêcheurs ont pris l'habitude d'utiliser des accessoires de pêche particuliers nommés « rouleaux à déboiter ».

De tels accessoires de pêche comportent classiquement un corps de rouleau réalisé en un matériau souple, mobile en rotation autour de son axe longitudinal qui a pour fonction de faciliter le déplacement vers l'arrière du talon et des derniers brins de la canne pour éviter leur endommagement.

Le corps de rouleau d'une canne de pêche au coup est équipé à ses extrémités respectives d'une broche repliable formant butée ainsi que d'une paire de pieds d'appui mobiles entre d'une part une position de repos dans laquelle ils sont rabattus le long du corps de rouleau et d'autre part une position d'utilisation dans laquelle ils sont dépliés obliquement vers l'extérieur de façon à définir un élément de type tréteau.

En position d'utilisation le corps de rouleau est orienté horizontalement et les deux pieds de chaque paire reposent sur le sol de part et d'autre de ce corps de rouleau en étant dos à dos en regard l'un de l'autre.

Les rouleaux à déboiter actuellement proposés sur le marché sont également équipés d'une barre de rigidification montée parallèlement au corps de rouleau.

Le document GB 2 301 007 A décrit un tel rouleau à déboiter. De tels rouleaux à déboiter classiques dont la structure est en aluminium correspondent à des éléments essentiellement rudimentaires dont la manoeuvre est peu aisée pour le pêcheur et l'expose à des risques de pincement.

La présente invention a pour objet de proposer un rouleau à déboiter adapté à la pêche au coup de nature à remédier à ces inconvénients.

Selon l'invention et conformément à la revendication 1, un tel rouleau à déboiter comporte deux joues latérales entre lesquelles est montée une barre de rigidification autour de laquelle est installé le corps de rouleau, coaxialement à celle-ci.

Selon l'invention, la barre de rigidification et le corps de rouleau habituellement distincts et parallèles sont ainsi réunis en une seule pièce.

De plus, chacune des joues latérales du rouleau à déboiter qui fait l'objet de l'invention est constituée par un élément en forme de U inversé comportant d'une part une branche centrale sur laquelle est fixée la barre de rigidification ainsi que la broche repliable et d'autre part deux branches latérales à l'extrémité desquelles sont articulés les pieds d'appui, autour d'un axe de rotation, par une première de leurs extrémités pour permettre leur déplacement entre la position de repos et la position d'utilisation.

Les branches latérales de ces joues latérales sont de préférence asymétriques et décalées de part et d'autre du corps de rouleau de sorte que deux pieds d'appui situés en regard de part et d'autre du corps de rouleau puissent être rabattus l'un contre l'autre parallèlement l'un à l'autre le long de ce corps de rouleau en position de repos, sans être situés dans le prolongement l'un de l'autre.

Il s'agit là d'une caractéristique particulièrement avantageuse de l'invention dans la mesure où elle permet au rouleau à déboiter d'avoir une hauteur nettement supérieure à celle des rouleaux à déboiter classiques en position d'utilisation du fait que la partie fixe des pieds d'appui peut avoir une longueur égale à celle du corps de rouleau.

Au contraire, dans les rouleaux à déboiter classiques, pour obtenir une hauteur similaire il est nécessaire de recourir à un enchevêtrement désordonné des pieds d'appui entrainant des difficultés de manipulation de ces pieds et en outre peu compatible avec une utilisation du rouleau à déboiter à plat à même le sol dans la position de repos.

Il arrive en effet que, en fonction de la géométrie du terrain, le pêcheur souhaite positionner le corps de rouleau de son rouleau à déboiter le plus près possible du sol.

Pour permettre un tel positionnement, les rouleaux à déboiter classiques sont équipés de pièces de maintien amovibles pouvant être montées sur le corps de rouleau dont la manipulation est particulièrement incommode

Selon une autre caractéristique de l'invention permettant de remédier à cet inconvénient les joues latérales sont équipées de pattes de maintien fixées à demeure sur celles-ci destinées à reposer sur le sol en position de repos.

Ces pattes de maintien sont fixées à la partie inférieure des branches latérales des joues latérales qui sont ainsi équipées chacune de deux pattes de maintien, ce qui permet d'obtenir un positionnement stable et régulier du rouleau à déboiter lorsqu'il est positionné à plat à même le sol en position de repos.

Selon une autre caractéristique de l'invention, les pattes de maintien sont équipées de perçages traversants destinés à recevoir un cordon permettant de relier ces pattes de maintien deux à deux de part et d'autre du corps de rouleau et d'y suspendre un lest de façon à améliorer la stabilité du rouleau à déboiter en position d'utilisation.

Les pieds d'appui sont avantageusement constitués par des éléments tubulaires fermés par des capuchons d'obturation à leur deux extrémités, à savoir leur première extrémité ou extrémité d'articulation et leur seconde extrémité ou extrémité d'appui.

Ces pieds d'appui sont de préférence télescopiques, c'est-à-dire constitués par une partie fixe et par au moins une partie coulissante de façon à permettre d'adapter leur longueur à la géométrie du terrain sur lequel ils doivent être positionnés.

Un autre inconvénient des rouleaux à débouter classiques est lié au fait que leurs pieds ne sont, en règle générale, pas bloqués dans la position de repos.

De tels rouleaux à déboiter présentent de surcroit une stabilité insuffisante dans la position d'utilisation, notamment en présence de vent ou sur un sol inégal, ce qui entraine des risques de renversement du rouleau.

Selon une autre caractéristique de l'invention de nature à remédier à ces inconvénients, chacun des pieds d'appui est articulé autour de l'axe d'articulation par l'intermédiaire de moyens d'articulation élastiques permettant son encliquetage dans des logements de réception situés à l'extrémité d'une branche latérale de la joue latérale associée et respectivement associés à la position de repos et à la position d'utilisation.

Dans ces deux positions, les pieds d'appui sont ainsi bloqués par encliquetage dans ces logements de réception par leur première extrémité ou extrémité d'articulation.

Ce blocage des pieds d'appui par encliquetage sur les joues latérales dans la position de repos et dans la position d'utilisation permet de garantir la stabilité du rouleau à déboiter dans ces deux positions et de surcroit de faciliter la manipulation de ce rouleau.

Selon l'invention, les moyens d'articulation élastiques de chacun des pieds d'appui comportent une tige d'articulation qui est montée mobile autour de l'axe de rotation par une première de ses extrémités et passe au travers du capuchon d'obturation équipant l'extrémité d'articulation du pied d'appui pour pénétrer à la partie interne de ce pied par sa seconde extrémité.

Ces moyens d'articulation élastiques comportent également un ressort de rappel qui est monté autour de la tige d'articulation, à la partie interne du pied d'appui et s'applique d'une part contre la paroi interne du capuchon d'obturation et d'autre part contre une butée fixée à la seconde extrémité de la tige d'articulation.

Cette tige peut avantageusement être filetée au niveau de sa seconde extrémité et coopérer avec un écrou constituant la butée de façon à permettre de régler la contrainte du ressort de rappel.

Du fait de cette configuration, chacun des pieds d'appui peut coulisser le long de la tige d'articulation associée, au niveau de son extrémité d'articulation entre d'une part une position déployée ou position de manoeuvre et d'autre part une position rétractée ou position d'encliquetage vers laquelle il est automatiquement rappelé en l'absence de toute contrainte externe s'exerçant sur lui.

Dans la position de manoeuvre la tige d'articulation est dégagée au maximum à l'extérieur du pied d'appui alors qu'en position d'encliquetage une grande partie de cette tige est logée à la partie interne de ce pied d'appui de façon à permettre l'encliquetage de celui-ci dans le logement de réception associé à la position de repos ou à la position d'utilisation.

A partir de cette position, en exerçant une traction sur un pied d'appui, le pêcheur peut transférer ce pied d'appui dans la position de manoeuvre pour permettre de le déplacer entre la position de repos et la position d'utilisation.

Dans ce but, les moyens d'articulation élastiques de chacun des pieds d'appui comportent également une gorge de liaison qui relie le logement de réception de ce pied associé à la position de repos et le logement de réception de ce pied associé à la position d'utilisation.

Cette gorge de liaison a une largeur suffisante pour permettre le passage de la partie dégagée de la tige d'articulation en position déployée, mais insuffisante pour permettre le passage de l'extrémité d'articulation du pied d'appui en position rétractée.

Lorsqu'il veut transférer son rouleau à déboiter de la position d'utilisation à la position de repos, le pêcheur doit successivement exercer une traction sur chacun des pieds d'appui pour la déplacer en position déployée de façon à extraire le capuchon d'obturation équipant l'extrémité d'articulation de ce pied d'appui du logement de réception associé à cette position et dégager l'extrémité de la tige d'articulation pour permettre son introduction dans la gorge de liaison.

Le pêcheur doit ensuite faire glisser la tige d'articulation et le pied d'appui le long de cette gorge jusqu'à ce que le capuchon d'obturation soit situé au droit du logement de réception associé à la position de repos.

Le pêcheur peut alors relâcher le pied d'appui qui est automatiquement rappelé dans la position rétractée dans laquelle le capuchon d'obturation vient se bloquer par encliquetage dans ce logement de réception.

Pour transférer le rouleau à déboiter de la position de repos à la position d'utilisation le pêcheur doit bien entendu effectuer les mêmes opérations en sens inverse.

Les caractéristiques du rouleau à déboiter qui fait l'objet de l'invention seront décrites plus en détail en se référant aux dessins non limitatifs annexés dans lesquels :
- la figure 1 est une vue en perspective d'un rouleau à déboiter en position d'utilisation,
- les figures 2a et 2b sont des vues en perspective de rouleaux à déboiter ayant des pieds de longueurs différentes en position de repos,
- la figure 3 est une vue latérale éclatée d'un rouleau à déboiter,
- la figure 4 est une vue éclatée d'un pied d'appui d'un rouleau à déboiter,
- la figure 5 représente un détail d'une joue latérale au niveau des logements de réception.

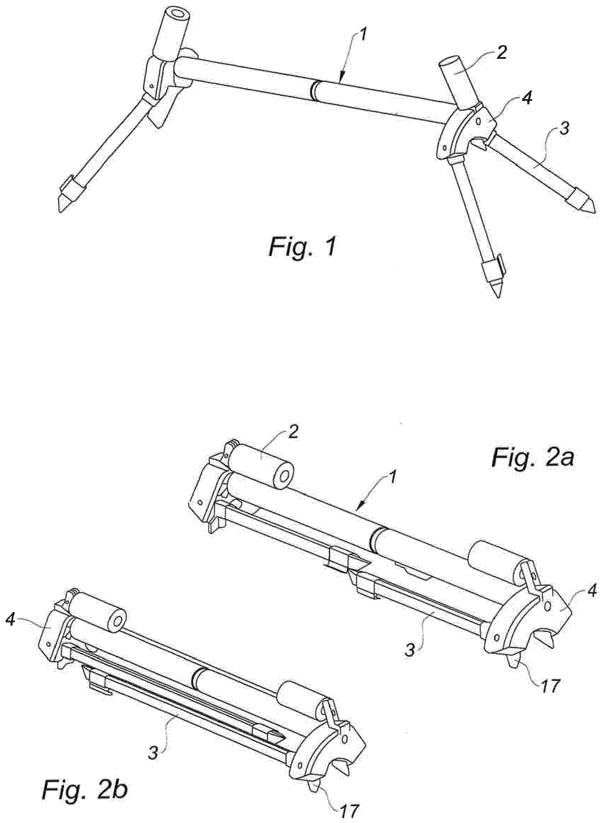

Selon les figures 1, 2a et 2b, le rouleau à déboiter comporte un corps de rouleau en un matériau souple 1 qui est réalisé en deux parties dans l'exemple représenté dans les figures, une broche repliable formant butée 2 ainsi que deux paires de pieds d'appui 3.

Les pieds d'appui 3 sont mobiles entre une position d'utilisation représentée sur la figure 1 dans laquelle ils sont dépliés obliquement vers l'extérieur de façon à définir un élément de type tréteau et une position de repos représentée sur les figures 2a et 2b dans laquelle ils sont rabattus le long du corps de rouleau 1.

En position d'utilisation, les pieds d'appui 3 des paires de pieds d'appui sont respectivement situés deux à deux en regard l'un de l'autre de part et d'autre du corps de rouleau 1.

Ce corps de rouleau 1 est quant à lui monté mobile en rotation autour d'une barre de rigidification non représentée sur les figures coaxialement à cette barre aux extrémités respectives de laquelle est fixée une joue latérale 4 en matière plastique essentiellement en forme de U inversé.

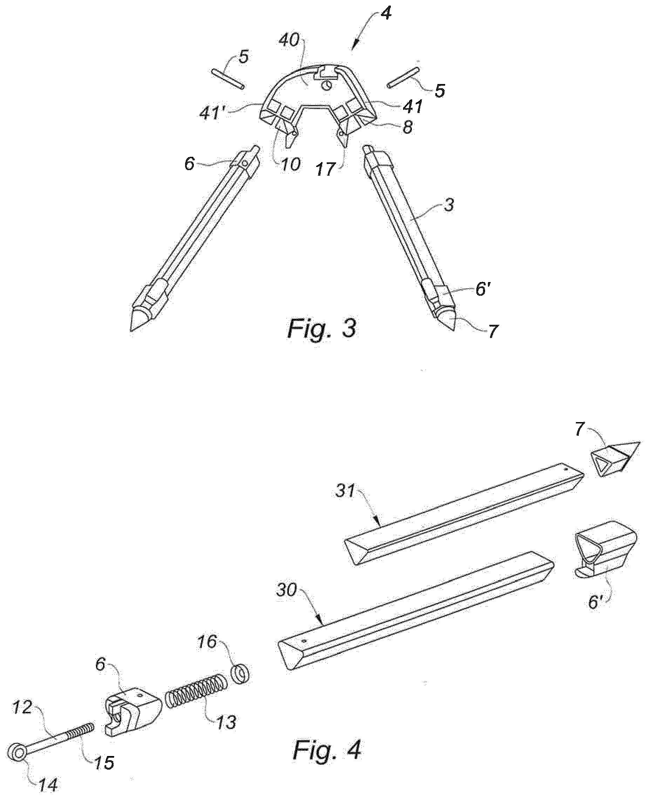

Comme représenté plus précisément sur la figure 3, chacune des joues latérales 4 comporte une branche centrale 40 fixée sur la barre de rigidification et sur laquelle est fixée une broche repliable 2, ainsi que deux branches latérales 41, 41' aux extrémités respectives desquelles est articulé un pied d'appui 3, autour d'un axe d'articulation 5, ce par des moyens d'articulation élastiques qui seront décrits plus en détail dans la suite de cet exposé.

Selon la figure 4, les pieds d'appui 3 sont constitués par des éléments tubulaires télescopiques de section triangulaire et comportent une partie externe fixe 30 et une partie interne 31 coulissant à la partie interne de cette partie fixe 30.

La partie fixe 30 est équipée d'un capuchon d'obturation en matière plastique à chacune de ses extrémités, à savoir d'un capuchon d'obturation 6 à sa première extrémité ou extrémité d'articulation et d'un capuchon d'obturation 6' à sa seconde extrémité ou extrémité d'appui.

Le capuchon d'obturation 6' est constitué par un élément tubulaire de façon à permettre le coulissement de la partie interne 31 du pied d'appui 3 au travers de celui-ci.

La partie interne 31 du pied d'appui 3 est quant à elle fermée à son extrémité externe ou extrémité d'appui par un capuchon 7 constituant un embout par lequel ce pied 3 vient en appui sur le sol en position d'utilisation.

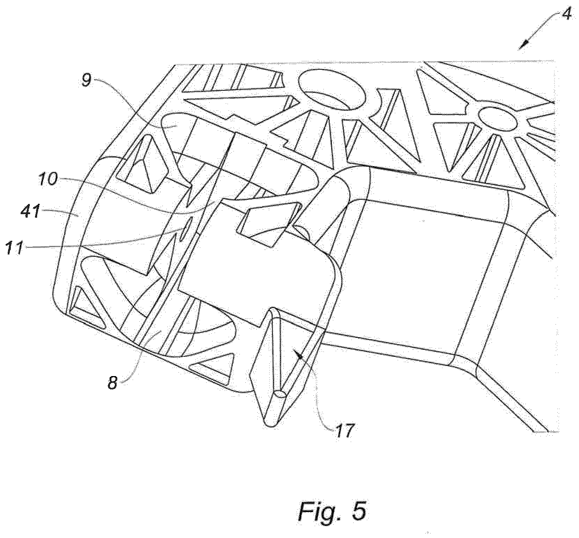

Selon les figures 3 et 5, les branches latérales 41, 41' des joues latérales 4 sont équipées chacune à leur extrémité de deux logements de réception 8, 9 du capuchon d'obturation 6 monté à l'extrémité d'articulation de la partie fixe 30 d'un pied d'appui 3.

La géométrie des logements de réception 8, 9 est adaptée à celle des capuchons d'obturation 6.

Ces logements de réception sont décalés angulairement l'un par rapport à l'autre et l'un, 8, correspond à la position d'utilisation tandis que l'autre 9 correspond à la position de repos.

Les deux logements de réception 8, 9 sont reliés par une gorge de liaison 10 au travers de laquelle s'étend perpendiculairement l'axe d'articulation 5 qui est logé dans des perçages 11 situés de part et d'autre de cette gorge.

Selon la figure 4, les moyens d'articulation élastiques de chacun des pieds d'appui 3 comportent essentiellement une tige d'articulation 12 ainsi qu'un ressort de rappel 13.

La tige d'articulation 12 est d'une part munie à une première de ses extrémités d'un oeillet 14 recevant l'axe d'articulation 5 de façon à permettre sa rotation autour cet axe, et passe d'autre part au travers du capuchon d'obturation 6 équipant l'extrémité d'articulation de la partie fixe 30 du pied d'appui 3 pour pénétrer à la partie interne de ce pied par sa seconde extrémité, au niveau de laquelle elle est munie d'un filetage 15.

Le ressort de rappel 13 est monté autour de la tige d'articulation 12 à la partie interne du pied d'appui 3 et s'applique d'une part contre la paroi interne du capuchon d'obturation 6 et d'autre part contre un écrou 16 formant une butée réglable vissé sur le filetage 15 de la tige d'articulation 12.

Ce ressort de rappel 13 est mobile entre une position contractée dans laquelle il est sollicité par une force de traction et une position étirée vers laquelle il est automatiquement rappelé en l'absence de toute contrainte externe s'exerçant sur lui.

Par suite, la partie fixe 30 de chacun des pieds d'appui 3 peut coulisser le long de la tige d'articulation 12 entre une position de manoeuvre dans laquelle le ressort de rappel 13 est contracté et sollicité par une force de traction et la tige d'articulation est déployée au maximum à la partie externe du pied d'appui 3 et une position d'encliquetage dans laquelle le ressort de rappel est étiré sans être soumis à une contrainte externe et la tige d'articulation 12 est largement rétractée à la partie interne du pied d'appui 3.

Selon la figure 5, la gorge 10 reliant le logement de réception 8 associé à la position d'utilisation des pieds d'appui 3 et le logement de réception 9 associé à la position de repos de ces pieds a une largeur suffisante pour permettre le passage de la tige d'articulation 12 lorsqu'elle est déployée mais insuffisante pour permettre le passage du capuchon d'obturation 6 lorsque cette tige est rétractée.

En exerçant une traction sur la partie fixe 30 d'un pied d'appui 3, le pêcheur peut déplacer ce pied en position de manoeuvre de façon à déployer la tige d'articulation 12 et à permettre le transfert de ce pied d'appui de la position d'utilisation à la position de travail ou inversement, en faisant glisser cette tige 12 le long de la gorge de liaison 10.

Lorsque le pêcheur relâche cette traction au droit de l'un des logements de réception 8, 9 la tige d'articulation se rétracte automatiquement à la partie interne du pied d'appui 3 et le capuchon d'obturation 6 vient se bloquer par encliquetage dans ce logement 8, 9.

De plus, et selon les figures 2a, 2b et 3, les branches latérales 41, 41' des joues latérales 4 sont asymétriques et orientées en sens inverse d'une joue latérale 4 à l'autre de sorte que deux pieds d'appui 3 situés en regard de part et d'autre du corps de rouleau 1 puissent être rabattus l'un contre l'autre parallèlement l'un à l'autre le long de ce corps de rouleau 1 en position de repos, comme représenté sur la figure 2a et sur la figure 2b selon laquelle ces pieds d'appui ont une longueur supérieure.

Selon les figures 2a, 2b, 3 et 5, les branches latérales 41, 41' des joues latérales 4 sont par ailleurs équipées à leur extrémité de pattes de maintien 17 destinées à reposer sur le sol en position de repos.

De façon non représentée sur les figures, ces pattes de maintien 17 sont équipées de perçages transversaux destinés à recevoir un cordon permettant de suspendre un lest sur le rouleau à déboiter dans la position d'utilisation représentée sur la figure 1.

### NOMENCLATURE

- 1.: Corps de rouleau
- 2.: Broche repliable
- 3.: Pieds d'appui
- 4.: Joue latérale
- 5.: Axe d'articulation
- 6. 6'.: Capuchon d'obturation
- 7.: Capuchon d'obturation
- 8.: Logement de réception
- 9.: Logement de réception
- 10.: Gorge de liaison
- 11.: Perçages
- 12.: Tige d'articulation
- 13.: Ressort de rappel
- 14.: Oeillet
- 15.: Filetage
- 16.: Ecrou
- 17.: Pattes de maintien
- 30.: Partie externe fixe
- 31.: Partie interne
- 40.: Branche centrale
- 41, 41'.: Branches latérales

## Revendications

1. Rouleau à déboiter adapté à la pêche au coup lors de la pratique de laquelle les pêcheurs utilisent une canne de grande longueur constituée par l'association de plusieurs éléments de canne qui s'emboitent les uns dans les autres, ce rouleau à déboiter comportant un corps de rouleau (1) mobile en rotation autour de son axe longitudinal, réalisé en un matériau souple et destiné à faciliter le déplacement de la canne vers l'arrière pour éviter son endommagement, ce corps de rouleau (1) étant équipé à ses extrémités respectives d'une broche repliable formant butée (2) ainsi que d'une paire de pieds d'appui (3) mobiles entre d'une part une position de repos dans laquelle ils sont rabattus le long du corps de rouleau (1) et d'autre part une position d'utilisation dans laquelle ils sont dépliés obliquement vers l'extérieur de façon à définir un élément de type tréteau,
**caractérisé en ce qu'**
il comporte deux joues latérales (4) entre lesquelles est montée une barre de rigidification autour de laquelle est installé le corps de rouleau coaxialement à celle-ci, chacune de ces joues latérales (4) étant constituée par un élément essentiellement en forme de U inversé comportant d'une part une branche centrale (40) sur laquelle est fixée la barre de rigidification ainsi que la broche repliable (2) et d'autre part deux branches latérales (41, 41') à l'extrémité desquelles sont articulés les pieds d'appui (3) autour d'un axe de rotation (5) par une première de leurs extrémités pour permettre leur déplacement entre la position de repos et la position d'utilisation.

2. Rouleau à déboiter conforme la revendication 1,
**caractérisé en ce que**
les branches latérales (41, 41') des joues latérales (4) sont asymétriques de sorte que deux pieds d'appui (3) situés en regard de part et d'autre du corps de rouleau (1) puissent être rabattus l'un contre l'autre parallèlement l'un à l'autre le long de ce corps de rouleau en position de repos.

3. Rouleau à déboiter conforme à l'une quelconque des revendications 1 et 2,
**caractérisé en ce que**
les joues latérales (4) sont équipées de pattes de maintien (17) destinées à reposer sur le sol en position de repos.

4. Rouleau à déboiter conforme à la revendication 3,
**caractérisé en ce que**
les pattes de maintien (17) sont équipées de perçages transversaux destinés à recevoir un cordon permettant de suspendre un lest sur le rouleau à déboiter en position d'utilisation.

5. Rouleau à déboiter conforme à l'une quelconque des revendications 1 à 4,
**caractérisé en ce que**
les pieds d'appui (3) sont constitués par des éléments tubulaires fermés par des capuchons d'obturation (6, 6', 7) à leurs deux extrémités, à savoir leur première extrémité ou extrémité d'articulation et leur seconde extrémité ou extrémité d'appui.

6. Rouleau à déboiter conforme à la revendication 5,
**caractérisé en ce que**
les pieds d'appui (3) sont télescopiques et sont constituées par une partie fixe (30) et par au moins une partie coulissante (31).

7. Rouleau à déboiter conforme à l'une quelconque des revendications 1 à 6,
**caractérisé en ce que**
chacun des pieds d'appui est articulé autour de l'axe d'articulation (5) par l'intermédiaire de moyens d'articulation élastiques permettant son encliquetage dans des logements de réception (8, 9) situés à l'extrémité d'une branche latérale (41, 41') de la joue latérale (4) associée, et respectivement associés à la position de repos et à la position d'articulation.

8. Rouleau à déboiter conforme à la revendication 7 et à l'une quelconque des revendications 5 ou 6,
**caractérisé en ce que**
les moyens d'articulation élastiques de chacun des pieds d'appui (3) comportent :
- une tige d'articulation (12) montée mobile autour de l'axe de rotation (5) par une première de ses extrémités et passant au travers du capuchon d'obturation (6) équipant l'extrémité d'articulation du pied d'appui (3) pour pénétrer à la partie interne de ce pied par sa seconde extrémité, et
- un ressort de rappel (13) monté autour de la tige d'articulation (12), à la partie interne du pied d'appui (3) et s'appliquant d'une part contre la paroi interne du capuchon d'obturation (6) et d'autre part contre une butée (16) fixée à la seconde extrémité de la tige d'articulation (12),
le pied d'appui (3) pouvant coulisser le long de la tige d'articulation (12), au niveau de son extrémité d'articulation entre d'une part une position déployée ou position de manoeuvre et d'autre part une position rétractée ou position d'encliquetage vers laquelle il est automatiquement rappelé en l'absence de toute contrainte externe s'exerçant sur lui.

9. Rouleau à déboiter conforme à la revendication 8,
**caractérisé en ce que**
les moyens d'articulation élastiques de chacun des pieds d'appui (3) comportent une gorge de liaison (10) reliant le logement de réception (9) de ce pied associé à la position de repos et le logement de réception (8) de ce pied associé à la position d'utilisation et ayant une largeur suffisante pour permettre le passage de la tige d'articulation (12) en position déployée mais insuffisante pour permettre le passage de l'extrémité d'articulation du pied d'appui (3) en position rétractée.

## Patentansprüche

1. Abroller geeignet für das Friedfischangeln, bei dem die Fischer eine Angelrute mit einer großen Länge verwenden, welche durch die Verbindung mehrerer, ineinandergreifender Rutenelemente gebildet ist, wobei der Abroller einen Rollenkörper (1) aufweist, der um seine Längsachse drehbar, aus einem flexiblem Material hergestellt und dazu geeignet ist, eine Verschiebung der Angelrute nach hinten zu erleichtern, um deren Beschädigung zu vermeiden, wobei der Rollenkörper (1) an seinen jeweiligen Enden mit einem klappbaren, einen Anschlag bildenden Zapfen (2) sowie einem Paar Stützfüße (3) versehen ist, welches zwischen einerseits einer Ruheposition, in der es entlang des Rollenkörpers (1) abgeklappt ist, und andererseits einer Gebrauchsposition, in der es schräg nach außen aufgeklappt ist, um ein gestellartiges Element zu definieren, bewegbar ist,
**dadurch gekennzeichnet, dass**
er zwei Seitenwangen (4) aufweist, zwischen denen eine Versteifungsstange montiert ist, um welche der Rollenkörper (1) koaxial zu dieser angeordnet ist, wobei jede dieser zwei Seitenwangen (4) durch ein im Wesentlichen umgekehrt U-förmiges Element gebildet ist, das einerseits einen Mittelschenkel (40), an dem die Versteifungsstange sowie der klappbare Zapfen (2) befestigt sind, und andererseits zwei Seitenschenkel (41, 41') aufweist, an deren Ende die Stützfüße (3) um eine Rotationsachse (5) durch ein erstes ihrer Enden gelenkig gelagert sind, um deren Bewegung zwischen der Ruheposition und der Gebrauchsposition zu ermöglichen.

2. Abroller gemäß Anspruch 1,
**dadurch gekennzeichnet, dass** die Seitenschenkel (41, 41') der Seitenwangen (4) asymmetrisch sind, so dass zwei Stützfüße (3), welche beidseits des Rollenkörpers (1) gegenüberliegend angeordnet sind, in der Ruheposition gegeneinander und parallel zueinander, entlang des Rollenkörpers abgeklappt werden können.

3. Abroller gemäß einem der Ansprüche 1 oder 2,
**dadurch gekennzeichnet, dass** die Seitenwangen (4) mit Haltelappen (17) versehen sind, welche dazu geeignet sind, in der Ruheposition auf dem Boden aufzuliegen.

4. Abroller gemäß Anspruch 3,
**dadurch gekennzeichnet, dass** die Haltelappen (17) mit Querbohrungen versehen sind, welche dazu geeignet sind, eine Schnur aufzunehmen, welche ein Aufhängen eines Ballasts auf dem Abroller in der Gebrauchsposition ermöglicht.

5. Abroller gemäß einem der Ansprüche 1 bis 4,
**dadurch gekennzeichnet, dass** die Stützfüße (3) durch rohrförmige Elemente gebildet sind, welche durch Abschlusskappen (6, 6', 7) an ihren zwei Enden, nämlich ihrem ersten Ende oder Gelenkende und ihrem zweiten Ende oder Stützende, abgeschlossen sind.

6. Abroller gemäß Anspruch 5,
**dadurch gekennzeichnet, dass** die Stützfüße (3) teleskopisch ausgebildet sind und von einem festen Teil (30) und mindestens einem Schiebeteil (31) gebildet sind.

7. Abroller gemäß einem der Ansprüche 1 bis 6,
**dadurch gekennzeichnet, dass** jeder der Stützfüße (3) um die Gelenkachse (5) durch elastische Gelenkmittel gelenkig gelagert ist, mit denen er in Aufnahmeräume (8, 9) eingerastet werden kann, die an dem Ende eines Seitenschenkels (41, 41') der entsprechenden Seitenwange (4) angeordnet sind, und jeweils der Ruheposition und der Gebrauchsposition zugeordnet sind.

8. Abroller nach Anspruch 7 und einem der Ansprüche 5 oder 6, **dadurch gekennzeichnet, dass** die elastischen Gelenkmittel jedes Stützfußes (3) aufweisen:
- eine Gelenkstange (12), welche über ein erstes ihrer Enden um die Rotationsachse (5) beweglich angeordnet ist und über ihr zweites Ende die Abschlusskappe (6), die an das Gelenkende des Stützfußes (3) angebaut ist, durchläuft, um in die innere Seite dieses Fußes zu gelangen, und
- eine Rückholfeder (13), die an der inneren Seite des Stützfußes (3) um die Gelenkstange (12) montiert ist, und die einerseits an der Innenwand der Abschlusskappe (6) und andererseits an einem Anschlag (16), welcher an dem zweiten Ende der Gelenkstange (12) befestigt ist, anliegt,
wobei der Stützfuß (3) an seinem Gelenkende zwischen einerseits einer ausgefahrenen Position oder Betätigungsposition und andererseits einer zurückgezogener Position oder Einrastposition, in die er automatisch zurückgebracht wird, entlang der Gelenkstange (12) gleiten kann, wenn keine äußere Spannung auf ihn ausgeübt wird.

9. Abroller gemäß Anspruch 8,
**dadurch gekennzeichnet, dass** die elastischen Gelenkmittel jedes Stützfußes (3) eine Verbindungsrille (10) aufweisen, welche den der Ruheposition zugeordneten Aufnahmeraum (9) dieses Fußes und den der Gebrauchsposition zugeordneten Aufnahmeraum (8) dieses Fußes verbindet und eine Breite aufweist, welche ausreichend ist, um den Durchlauf der Gelenkstange (12) in ausgefahrener Position zu erlauben, aber unzureichend ist, um den Durchlauf des Gelenkendes des Stützfußes (3) in zurückgezogener Position zu erlauben.

## Claims

1. Pole roller which is suitable for still fishing, during which the anglers use a rod of a great length which is constituted by the association of a plurality of rod elements which are fitted one inside the other, this pole roller comprising a roller body (1) which can be moved in rotation about the longitudinal axis thereof and which is produced from a flexible material and is intended to facilitate the movement of the rod to the rear in order to prevent it from becoming damaged, this roller body (1) being provided at the respective ends thereof with a foldable pin which forms a stop (2) and a pair of support feet (3) which can be moved between, on the one hand, a rest position in which they are folded along the roller body (1) and, on the other hand, a position for use in which they are unfolded obliquely to the outer side in order to define an element of the trestle type,
**characterised in that**
it comprises two lateral walls (4) between which there is mounted a reinforcement bar around which the roller body is installed coaxially therewith, each of these lateral walls (4) being constituted by an element which is substantially in the form of an inverted U and which comprises, on the one hand, a central branch (40) to which the reinforcement bar is fixed and the foldable pin (2), and, on the other hand, two lateral branches (41, 41') at the end of which the support feet (3) are articulated about a rotation axis (5) via a first of the ends thereof in order to enable them to be moved between the rest position and the position for use.

2. Pole roller according to claim 1,
**characterised in that**
the lateral branches (41, 41') of the lateral walls (4) are asymmetrical so that two support feet (3) located opposite each other at one side and the other of the roller body (1) can be folded one against the other parallel with each other along this roller body in a rest position.

3. Pole roller according to either claim 1 or claim 2,
**characterised in that**
the lateral walls (4) are provided with retention lugs (17) which are intended to rest on the ground in a rest position.

4. Pole roller according to claim 3,
**characterised in that**
the retention lugs (17) are provided with through-holes which are intended to receive a cord which enables a ballast to be suspended on the pole roller in a position of use.

5. Pole roller according to any one of claims 1 to 4,
**characterised in that**
the support feet (3) are constituted by tubular elements which are closed by means of closure caps (6, 6',7) at the two ends thereof, that is to say, their first end or articulation end and their second end or support end.

6. Pole roller according to claim 5,
**characterised in that**
the support feet (5) are telescope-like and are constituted by a fixed portion (30) and by at least one sliding portion (31) .

7. Pole roller according to any one of claims 1 to 6,
**characterised in that**
each of the support feet is articulated about the articulation axis (5) via resilient articulation means which enable it to be snap-fitted in receiving housings (8, 9) which are located at the end of a lateral branch (41, 41') of the associated lateral wall (4) and which are associated with the rest position and the articulation position, respectively.

8. Pole roller according to claim 7 and either claim 5 or claim 6,
**characterised in that**
the resilient articulation means of each of the support feet (3) comprise:
- an articulation rod (12) which is mounted so as to be able to be moved about the rotation axis (5) via a first of the ends thereof and which extends through the closure cap (6) with which the articulation end of the support foot (3) is provided in order to penetrate the inner portion of this foot via the second end thereof, and
- a return spring (13) which is mounted around the articulation rod (12), on the inner portion of the support foot (3), and which presses, on the one hand, against the inner wall of the closure cap (6) and, on the other hand, against a stop (16) which is fixed to the second end of the articulation rod (12),
the support foot (3) being able to slide along the articulation rod (12) in the region of the articulation end thereof between, on the one hand, a deployed position or handling position and, on the other hand, a retracted position or snap-fitting position to which it is automatically returned in the absence of any external constraint being applied thereto.

9. Pole roller according to claim 8,
**characterised in that**
the resilient articulation means of each of the support feet (3) comprise a connection recess (10) which connects the receiving housing (9) of this foot associated with the rest position and the receiving housing (8) of this foot associated with the position for use and having a width which is sufficient to allow the passage of the articulation rod (12) into the deployed position but insufficient to allow the passage of the articulation end of the support foot (3) into the retracted position.
